## Europäisches Patentamt

## European Patent Office

## Office européen des brevets

(11) Veröffentlichungsnummer: **0 076 958**
A2

(12) # EUROPÄISCHE PATENTANMELDUNG

(21) Anmeldenummer: 82108884.6

(22) Anmeldetag: 25.09.82

(51) Int. Cl.³: **A 62 C 3/04**, B 65 G 43/00

(30) Priorität: 13.10.81 DE 3140553

(71) Anmelder: **Bühler-MIAG GmbH,
Ernst-Amme-Strasse 19 Postfach 33 69,
D-3300 Braunschweig (DE)**

(43) Veröffentlichungstag der Anmeldung: **20.04.83**
**Patentblatt 83/16**

(72) Erfinder: **Bartknecht, Wolfgang, Dr.-Ing., Egerstrasse 12,
D-7858 Weil am Rhein (DE)**
Erfinder: **Kossebau, Friedrich, Dipl.-Ing.,
Heinrichstrasse 3, D-3300 Braunschweig (DE)**

(84) Benannte Vertragsstaaten: **AT BE CH DE FR GB IT LI LU
NL SE**

(54) **Explosionsgeschützter Senkrechtförderer.**

(57) Ein Beckerwerk (1) ist zum Schutz bei Explosionen
staubhaltiger Schüttgüter für einen reduzierten Explosionsdruck ausgelegt und in seinen Schächten (2, 3) sowie im Ein-
und Auslauf (8, 9) mit Löschmittelsperren (10) ausgerüstet,
denen Flammenmelder (11) zu Erkennen von Staubexplosionen zugeordnet sind. Beim Auftreten einer Explosion
wird diese durch eine oder mehrere der Löschmittelsperren
(10) abgebrochen. Die bis zum Explosionsabbruch auftretenden, relativ niedrigen Drücke werden von dem entsprechend verstärkten Becherwerksgehäuse problemlos
aufgenommen. Gleichzeitig wird eine explosionstechnische
Entkopplung des Becherwerks (1) von den übrigen Anlagenteilen bewirkt.

- 1 -

## Explosionsgeschützter Senkrechtförderer

Die Erfindung bezieht sich auf einen explosionsgeschützten, für reduzierten Explosionsdruck ausgelegten, geschlossenen Senkrechtförderer für staubhaltige Schüttgüter, insbesondere auf ein Becherwerk.

In Anlagen zum Umschlagen brennbarer Schüttgüter ereignen sich von Zeit zu Zeit Explosionen mehr oder weniger großen Ausmaßes, deren Ursprungsort nach der Statistik vor allem Becherwerke sind. Es sind daher Maßnahmen wünschenswert, die sicher verhindern, daß Menschen und Sachanlagen durch solche Explosionen gefährdet werden.

In Annäherung an dieses Ziel hat man sich bisher im wesentlichen darauf beschränkt, die Entstehung möglicher Zündquellen im Becherwerk durch Drehzahl- und Schieflaufwächter, Verwendung antistatischer Gurte etc. zu verhindern. Jedoch konnten diese Maßnahmen niemals vollständig sein, da zum Beispiel das Eindringen sogenannter Glimmnester in ein Becherwerk mangels geeigneter Detektoren bis heute nicht sicher verhindert werden kann.

Eine wirksame Maßnahme zur Explosionsverhinderung stellt der Betrieb unter Schutzgas, die sogenannte Inertisierung, dar. Indessen steht ihrer Einführung der hohe Investitionsaufwand für eine gasdichte Becherwerksausführung sowie der hohe Inertgasverbrauch entgegen, der sich besonders daraus ergibt, daß wegen des meist hohen Luftgehaltes der Schüttgüter die Inertisierung schon vor deren Eintritt in das Becherwerk erfolgen muß.

Weiterhin sind druckfeste Becherwerke bekannt, die jedoch bei größeren Bauhöhen für Drücke von mindestens 30 bar auszulegen sind, was eine materialaufwendige, kostspielige Bauweise bedingt. Da in Längsrichtung der Schachtrohre in Spitzenwerten noch höhere Drücke auftreten können, ergibt sich für die Ausführung von Kopf- und Fußteilen sowie für sogenannte Entkoppelungseinrichtungen, die ein Weiterlaufen von Explosionen in andere Anlagenbereiche unterbinden sollen, eine noch aufwendigere Bauweise, so daß dem praktischen Einsatz schon aus Kostengründen enge Grenzen gezogen sind.

Etwas günstiger verhält es sich in dieser Beziehung mit der gelegentlich durchgeführten Schutzmaßnahme Druckentlastung, bei der die Explosion als solche in Kauf genommen wird, jedoch durch Druckentlastungsöffnungen für eine Ableitung des Explosionsdrucks ins Freie gesorgt wird. Bei Becherwerken sind hierbei neben einer gewissen erhöhten Festigkeit der Schächte für einen reduzierten Explosionsdruck in regelmäßigen Abständen von cirka zwei Meter Entlastungsöffnungen angeordnet, die jedoch nicht in Betriebsräume oder Verkehrswege weisen dürfen, da diese Öffnungen im Explosionsfall wie Flammenwerfer wirken. Da auch hier der Druck der in Längsrichtung der Schächte wirkenden Explosionswelle am größten ist, müssen die Kopfhauben ebenfalls als Entlastungseinrichtungen ausgebildet sein. Weiterhin muß ein solches Becherwerk im Zu- und Ablaufbereich mit geeigneten Entkoppelungseinrichtungen wie zum Beispiel Schleusen oder Schnellschlußschieber gegenüber den übrigen Bereichen der Gesamtanlage versehen sein, wobei diese Elemente im Explosionsfall über Detektoren stillgesetzt bzw. betätigt werden. Im Regelfalle muß ein solches Becherwerk aus den genannten Gründen im Freien aufgestellt werden, was neben entsprechenden Korrosionsschutzmaßnahmen zusätzliche Querförderer zur Verbindung mit der Gesamtanlage und somit einen nicht unerheblichen zusätzlichen Kostenaufwand erfordert.

Der Erfindung liegt die Aufgabe zugrunde, für Becherwerke einen kostenmäßig vertretbaren Explosionsschutz zu schaffen, der die Anlagenplanung und -ausführung nicht beeinträchtigt und die Installation von Becherwerken in Betriebsräumen ohne Gefährdung menschlichen Lebens und ohne Beeinträchtigung von Verkehrswegen ermöglicht. Weiterhin wird die Verhinderung der Fortpflanzung von Explosionen aus dem Becherwerk über Rohrleitungen in andere Anlagenteile, das heißt, die explosionstechnische Entkopplung, mit wirtschaftlich vertretbarem Aufwand angestrebt.

Erfindungsgemäß wird diese Aufgabe gelöst durch im Vor- und Rücklaufschacht sowie vor dem Einlauf und hinter dem Auslauf angeordnete, an sich bekannte Löschmittelsperren und diesen zugeordnete, in den Schächten sowie im Kopf- und Fußteil des Senkrechtförderers angeordnete, an sich bekannte Flammenmelder.

Hierbei kommt die für Rohrleitungen an sich bekannte Methode des Explosionsabbruches zur Anwendung, gemäß der eine auftretende Explosion durch Flammenmelder, vorzugsweise in Form von Infrarotdetektoren, erkannt wird, und ein entsprechender Auslöseimpuls über Verstärker sehr schnell die sprengkapselbetätigten Ventile von unter hohem Treibmitteldruck stehenden Löschmittelvorratsbehältern auslöst, wodurch der Weg für das Löschmittel in das Rohrinnere über Zerstäubungs-

0076958

düsen freigegeben und die Explosion sozusagen abgebrochen wird. Der Anwendung dieser Methode bei Becherwerken stand nach herrschender Lehrmeinung die Befürchtung entgegen, daß - im Gegensatz zu Rohrleitungen ohne Einbauten - der Becherstrang turbulenzsteigernd wirken und somit die Heftigkeit von Explosionen bis zum Umschlag in nicht mehr beherrschbare Detonationen verstärken würde.

Gemäß einer weiteren zweckmäßigen Ausgestaltung der Erfindung ist in Vor- und Rücklaufschacht alle 25 bis 35 m eine Löschmittelsperre angeordnet. Damit wird der Explosionsdruck reduziert auf Drücke kleiner als 3 bar bei Stäuben der Explosionsklasse 1, und gleichzeitig ist ein praktisch und wirtschaftlich vernünftiger Wert für übliche Becherwerksgrößen und überwiegend zu fördernde staubhaltige Schüttgüter gegeben.

Gemäß einem weiteren Erfindungsgedanken ist keine der Löschmittelsperren weiter als 5 bis 8 m vom nächstgelegenen Flammenmelder entfernt angeordnet. Dies reicht, wie Versuche gezeigt haben, bei Förderung der überwiegend vorkommenden Güter der Staubexplosionsklasse 1 in Becherwerken aus, um ein rechtzeitiges Ansprechen der Löschmittelsperren und damit den Abbruch der Explosion sicher zu gewährleisten.

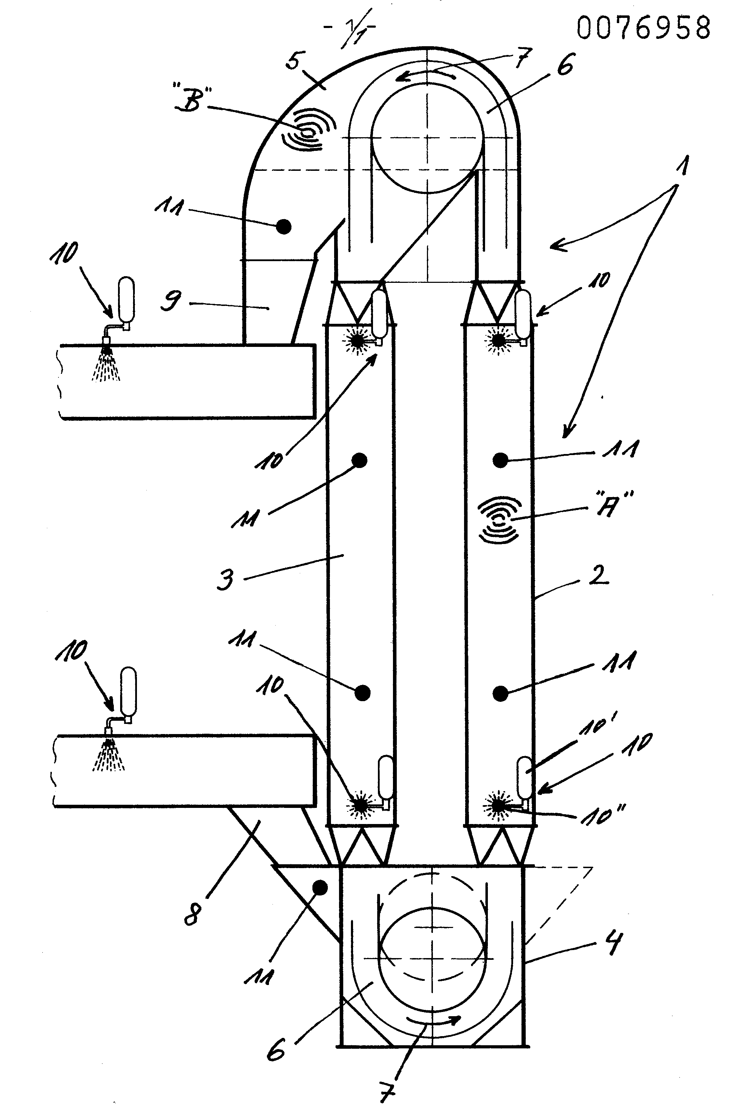

In der Figur ist ein Ausführungsbeispiel der Erfindung schematisch dargestellt, das im folgenden näher beschrieben wird.

Das Becherwerk 1 besteht aus einem Vorlaufschacht 2 und einem Rücklaufschacht 3 sowie einem diese beiden Schächte aufnehmenden Fußteil 4 und einem sie nach oben abschließenden Kopfteil 5. In dem Becherwerk läuft ein lediglich angedeuteter Becherstrang 6 in Richtung der Pfeile 7 um und fördert hierbei über den Einlauf 8 in das Fußteil 4 eingebrachtes staubhaltiges Schüttgut bis in den Kopfteil 5 des Becherwerkes und von dort in den Auslauf 9. In den Schächten 2 und 3 sowie im Einlauf 8 und dem Auslauf 9 sind Löschmittelsperren 10 angeordnet, die im wesentlichen je aus einem Löschmittelvorratsbehälter 10' mit unter hohem Treibmitteldruck stehendem Inhalt und einer Düse 10" zum fächerförmigen Einsprühen des Löschmittels in die jeweiligen Bereiche des Becherwerkes 1 bzw. seinen Einlauf 8 und Auslauf 9 bestehen. Hierbei kann der Abstand zwischen einer unteren und einer oberen Löschmittelsperre 10 in den Schächten 2 bzw. 3 bis zu 35 m betragen, so daß bei Becherwerken mittlerer Höhe mit der gezeigten Anzahl Löschmittelsperren auszukommen ist. Bei über 35 m Schachtlänge wird - bis zu einer Schachtlänge von cirka 70 m - eine weitere Löschmittelsperre je Schacht notwendig, bei noch größerer Schachtlänge entsprechend mehrere.

Den Löschmittelsperren 10 zugeordnet sind Flammenmelder 11 und zwar derart, daß keine Löschmittelsperre 10 weiter als maximal 8 m vom nächstgelegenen Flammenmelder 11 entfernt angeordnet ist. Man erkennt, daß zum Beispiel eine bei A sich ausbildende Explosion sowohl von dem darüber als auch von dem darunter befindlichen Flammenmelder 11 erkannt und mittels der benachbarten Löschmittelsperren 10 im oberen und unteren Teil des Vorlaufschachtes 2 abgebrochen wird, bevor sie größeren Schaden anrichten kann. Um die bis zum Explosionsabbruch auftretenden Drücke aufnehmen zu können, ist das gesamte Becherwerk für den relativ geringen auftretenden Explosionsdruck ausgelegt, und die Schächte 2 und 3 sind zur Vermeidung von Biegemomenten als Rohre kreisförmigen Querschnitts ausgebildet.

0076958

In analoger Weise wird zum Beispiel eine sich bei B
im Kopfteil 5 des Becherwerkes 1 ausbildende Explosion von dem im Kopfteil befindlichen Flammenmelder 11
erkannt und von der Löschmittelsperre 10 im Auslauf 9
abgebrochen.

Patentansprüche

1. Explosionsgeschützter, für reduzierten Explosionsdruck ausgelegter, geschlossener Senkrechtförderer für staubhaltige Schüttgüter, insbesondere Becherwerk, gekennzeichnet durch im Vor- und Rücklaufschacht (2,3) sowie vor dem Einlauf (8) und hinter dem Auslauf (9) angeordnete, an sich bekannte Löschmittelsperren (10) und diesen zugeordnete, in den Schächten (2,3) sowie im Kopf- und Fußteil (5,4) des Senkrechtförderers (1) angeordnete, an sich bekannte Flammenmelder (11).

2. Senkrechtförderer nach Anspruch 1, dadurch gekennzeichnet, daß in Vor- und Rücklaufschacht (2,3) cirka alle 25 bis 35 m eine Löschmittelsperre (10) angeordnet ist.

3. Senkrechtförderer nach Anspruch 2, dadurch gekennzeichnet, daß keine der Löschmittelsperren (10) weiter als 5 bis 8 m vom nächstgelegenen Flammenmelder (11) entfernt angeordnet ist.